**Europäisches Patentamt**

**European Patent Office**

**Office européen des brevets**

(11) Publication number: **0 157 997**
**B1**

# (12) EUROPEAN PATENT SPECIFICATION

(45) Date of publication of patent specification: **09.01.91**

(51) Int. Cl.⁵: **G 01 D 18/00, G 01 R 17/06**

(21) Application number: **84850315.7**

(22) Date of filing: **23.10.84**

(54) **Programmable multi-channel tool monitor with multiple alarm limits and sensor taring.**

(30) Priority: **16.11.83 US 552434**

(43) Date of publication of application:
**16.10.85 Bulletin 85/42**

(45) Publication of the grant of the patent:
**09.01.91 Bulletin 91/02**

(84) Designated Contracting States:
**DE FR GB IT SE**

(56) References cited:
**WO-A-80/01851**
**GB-A-2 089 993**
**US-A-4 198 677**
**US-A-4 399 515**

(73) Proprietor: **Santrade Ltd.**
**Alpenquai 12 P.O. Box 321**
**CH-6002 Luzern (CH)**

(72) Inventor: **Norberg, Rolf**
**Hamngatan 13**
**S-811 61 Sandviken (SE)**
Inventor: **Svensson, Thomas**
**Hirschberg 2**
**D-2945 Laubershausen (DE)**

(74) Representative: **Taquist, Lennart et al**
**Sandvik AB Patents & Licences Fack**
**S-811 81 Sandviken 1 (SE)**

Courier Press, Leamington Spa, England.

## Description

### Field of the invention

The present invention relates generally to tool monitoring, and more specifically to sensor taring and multiple alarm implementation in a tool monitoring system.

### Background of the invention

Increasingly more sophisticated automated manufacturing systems are being developed and adopted by industry. Greater attention is being paid to automatic inspection and tool compensation to improve the productivity of such systems. An important aspect of such inspection is in-process inspection to spot dynamic failures, such as breakage or tool wear. A variety of techniques for real-time tool and process monitoring that would allow detection and correction of such errors have been and are currently being developed. A variety of approaches, which rely on sensing different operating conditions, have been utilized. There is thus a need for a flexible monitoring system which is readily adapted to different manufacturing systems, different monitoring techniques and different sensors.

In addition, due to the increasing precision of automatic manufacturing systems, there is an increasing need for tool monitoring techniques which incorporate multiple condition sensing and differentiation of alarm limits depending upon the particular operation being performed by a machine tool.

A further need dictated by the increasing precision and complexity of automated manufacturing systems is economic high-resolution taring of the output signals from multiple sensors, to compensate for sensor drift and ignore the effects of friction forces that are generated under no-load conditions.

In the past various devices have been devised for the purpose of accomplishing a drift compensation of the null point of a measuring device. Typical techniques that are employed can be derived as an example from WO—A—8001851.

The apparatus disclosed in WO—A—8001851 publication does not use an untared value of the transducer output to derive a reference tare value. It lso does not disclose the use of a high resolution digital tare signal. Nor does it disclose the use of a low resolution approximation since both the A/D converter and the D/A converter are 8-bit resolution devices.

The publication WO—A—8001851 also fails to disclose a means for subtracting digital tare signals from high resolution digital signals since there is no means for subtracting digital values at all and since there is no distinction between the high resolution and low resolution tare values.

Other systems compensate a sensor output through the use of a closed loop including a digital processor, a digital to analog converter and a comparator having inputs coupled to the converter and the sensor and an output fed back to the digital processor, such as disclosed in the U.S. Patent 4,198,677 to Brunner. In this system, during calibration of the sensor, the signal from the sensor is tracked by the digital processor and at least one of the values characteristic of the sensor signal is stored in the digital processor. The stored value is used as or in computation of a reference by the digital processor which is compared with the sensor signal during operation of the sensor to appropriately compensate the sensor for gain, offset, drift or degradation in the quality of the sensor signal.

Other types of systems, such as the self-correcting electronically scanned pressure sensor of the U.S. Patent 4,399,515 to Gross uses solid state memory components which store a digital code that will correct for errors resulting from temperature changes. The stored value is converted to an analog signal and applied to the summing mode of a sensor amplifier which subtracts the offset voltage from the corresponding sensor output. The system merely corrects inherent thermal shift errors of the pressure sensors and their associated electronics.

Yet another system involves an apparatus for correcting the output signal in the sensor is disclosed in U.K. Patent Application GB 2 089 993. In this system, the output of the sensor is connected to a correction unit which corrects the output signal from the sensor to produce an output signal having a known relationship to the actual concentration of a substance at the sensor. Thus, this system is directed to correcting a variation or impairment of a sensor sensitivity which results from exposure to the substance it is detecting.

### Summary of the invention

Accordingly, it is a principal object of present invention to provide a programmable multichannel tool monitor with multiple alarm limits and automatic selection of alarm limits in dependence on the tool operation being performed.

It is a further object of the present invention to provide an automated tool monitor with a simplified, low-cost taring system.

In accordance with one aspect of the present invention a multiple condition sensing and multiple alarm generating monitor for an automated machine tool which is repetitively stepped through a predetermined sequence of operations comprises a sensor for sensing each of a plurality of tool operating conditions, a memory for storing, for each sensed condition and for each tool operation or predetermined block of tool operations, alarm limit data defining a set of first limits; a memory addresser for sequentially accessing the memory in response to predetermined control signals used to control operation of the machine tool such that the accessed alarm limit data is changed in synchronization with operation of the machine tool; and a comparator for comparing the output of each sensor with the currently accessed corresponding alarm limit data. At least one factor for defining a corresponding set of further alarm limits as a function of the set of first alarm limits advantageously is also stored, and the comparator compares the output of each sensor with the set of further alarm limits. The monitor advantageously further comprises circuitry for disabling generation of selected alarms during predetermined periods of tool operation. The alarm limit data advantageously is stored in the memory in a two-dimensional column-row matrix, with each column being dedicated to a corresponding sensor and each row being dedicated to a corresponding tool operation or block of operations.

In accordance with a further aspect of the present invention, the output of a sensor producing an electrical output signal is tared, to provide a reference zero level, by: deriving a reference tare value from the output signal prior to taring; taring in an analog fashion the output signal using an analog biasing signal derived from a low resolution approximation of the reference tared value; sampling the tared signal; converting each sample to a full resolution equivalent digital signal; and subtracting from each equivalent digital signal a full resolution digital tare signal corresponding to the difference between the reference tare value and the low-resolution approximation thereof, thereby producing fully tared digital sensor output signals. Advantageously the reference tare value corresponds to the magnitude at a predetermined time of the output signal after amplification by an amplifier, and the analog biasing signal advantageously controls the amplification of the amplifier.

These and other features and advantages of the present invention will be apparent from the following detailed description of preferred embodiments illustrated in the accompanying drawings.

Brief description of the drawings

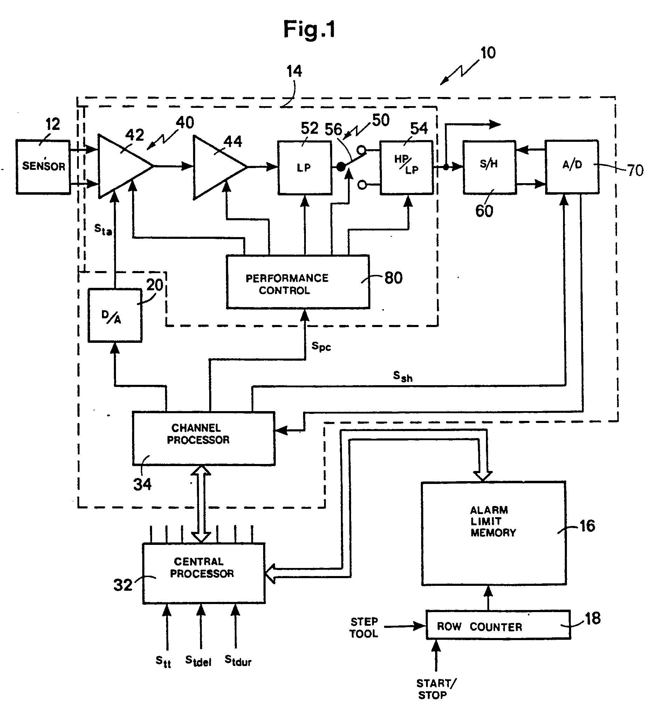

Figure 1 is a diagrammatic circuit schematic of a tool monitor constructed in accordance with the present invention;

Figure 2 is a graph illustrating the relationship of the alarm limit values to the sensor signal in a normal operating mode; and

Figure 3 is a graph illustrating the tared and untared sensor signals.

Detailed description of the preferred embodiments

The illustrated preferred embodiment of a programmable, multichannel machine tool monitor constructed in accordance with the present invention is specifically adapted to monitor machine tools which are repetitively stepped through a predetermined sequence of operations, e.g., numerical control systems. The monitor generally comprises a separate signal processing circuit, generally denoted 10, for each sensor 12 that is used to monitor a particular operating condition, such as feed force, for example. Each signal processing circuit 10 is computer programmable to interface the monitor with a particular sensor selected by the operator and the particular machine being monitored. Each sensor 12 and associated signal processing circuit 10, hereinafter referred to collectively as a "channel" unit, monitors a selected machine operating parameter and compares the sensed operating condition with prestored, operator-programmable alarm limits to determine the existence of an alarm condition. When an alarm condition is determined to exist, a predetermined machine shutdown or other control signal (not shown) is generated and/or a predetermined alarm display (not shown) is activated.

An alarm limit memory 16 is organized to store separate alarm limit information, e.g., maximum permissible signal levels and maximum permissible durations of such signal levels, for each sensor 12 and for each operation or "block" of related operations. Advantageously, alarm limit data is stored in memory 16 in a two-dimensional matrixed format, wherein each column is dedicated to one channel unit and each row to a monitoring block or processing step.

The memory can be randomly-accessed in a conventional manner using individualized BCD address signals. However, the generation of such address signals might be difficult in a machine such as a numerical control machine. Therefore, in accordance with the invention, the basic access, or address, method is to sequentially address each row in the memory in response to signals which are inherently generated by the machine for control purposes. This addressing of the memory can be carried out with a memory pointer comprising a row counter 18 which is incremented in response to machine control or timing signals that signify the start and/or finish of each operation/block. The counter 18 is reset in resposne to machine signals signifying the start or finish of a machine cycle.

Additional alarm limits related to the stored limits can also be calculated using operator selectable transformation functions, e.g., multiplication factors. Advantageously, the sensor peak signal data is stored separately in the alarm limit memory and different alarm levels are calculated from the peak values by multiplying them by separately stored alarm factors for each channel. Further, selective enabling of the alarm function advantageously is provided such that only predetermined maximum range alarms are enabled during selected machine operating periods, e.g., during tool and workpiece repositioning between tool work operations, when acceptable peak sensor signals typically occur which exceed the peak signals permitted when the workpiece is actually being worked.

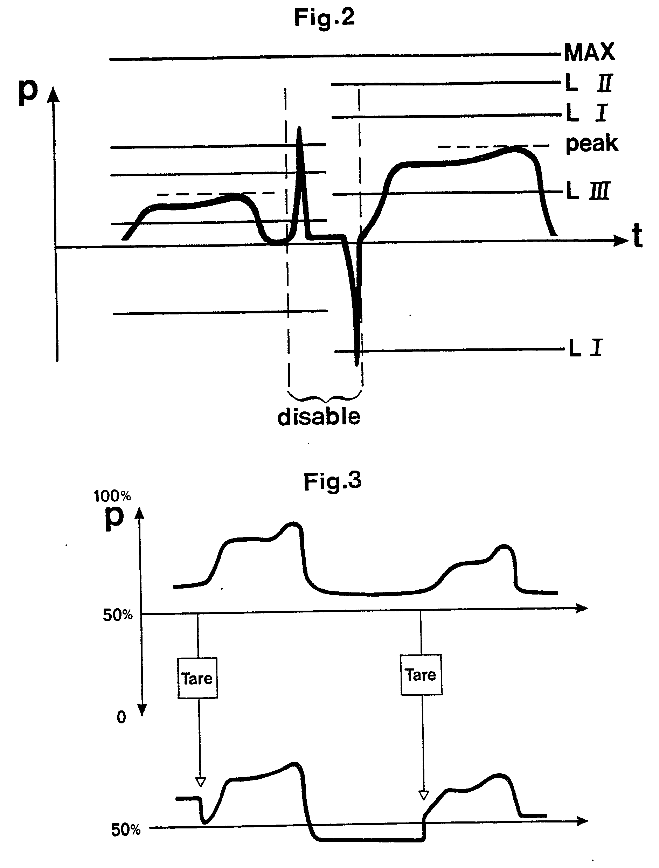

More particularly, and with reference to Figure 2, when a new operating condition is first initiated, for example, when a fresh tool has been installed on the machine or a new batch of workpieces are to be worked, the machine is first stepped through its sequence of operations in a learning mode, and the sensed force p is measured. In the learning mode, the peak sensor value for each operation is detected and stored in the memory 16. Also stored in the memory are user selected alarm limit factors which, when multiplied by the peak value for an operation, determine the acceptable alarm levels for that operation. As shown in Figure 2, three alarm levels are established for each operation. The first level (LI) can relate to tool wear and be equal to 1.2 times the peak value, for example. The second level (LII) can relate to tool breakage and be 1.5 times the peak value, for example. A third level (LIII) might function as a lost tool detector and be equal to 0.5 times the stored peak value, for example.

Each alarm limit factor also has an associated, user-selected, response time that is likewise stored in the memory. For example, the response time for LI might be 700 ms so that if the sensor signal exceeds 1.2 times the stored peak value for this duration of time, an alarm signal is provided to indicate excessive tool wear. Similarly, if the sensor signal exceeds 1.5 times the peak value for 10 ms, for example, a signal can be provided to prevent breaking of the tool, of if the signal does not remain above the LIII level for at least 50 ms after it first reaches this level, a signal can be provided to indicate that the machining operation has been prematurely interrupted.

Between each individual operation the sensor signal might normally exceed the acceptable alarm limits for an operation, for example due to acceleration of the tool for repositioning. In such a case, the comparison of the sensor signal to the LI—LIII alarm levels can be disabled for a predetermined time after each step tool signal, to avoid unnecessary generation of alarm signals. However, it may be advantageous to have a fourth, maximum alarm level that is not disabled, to detect improper conditions during repositioning.

System operation, including communication with the operator, configuration of the monitor to establish an interface with the machine to be monitored and with the monitoring sensors, control of monitor operation to define selected operating modes, generation and storage of alarm limit data, supervision of channel operation, and the processing of the sensor data are handled by a distributed logic microprocessor network, comprising a central processor 32 and a separate local processor 34 for each channel unit. The central processor 32 handles operator communication, generation of general system control signals, and the generation and storage of alarm limit data, e.g. multiplication of the stored peak value by the alarm limit factors to generate the alarm levels. Processing of the sensor data is handled principally by the local channel processor 34.

Once the monitor has been installed and the interfacing and alarm limit parameters defined, at start-up the central processor 32 performs a check-up of system functions, and down-loads channel-specific interfacing and initial alarm limit parameters to the local processor 34 for each active channel unit. During monitoring, the central processor 32 updates each channel unit with new alarm limit data for each block in response to the machine control signals used as reference signals. The central processor 32 also performs a continuous self-test verification procedure to confirm proper operation of the channel unit, and continuously updates various indicating displays (not shown) based on data received from the channel units.

For each machine operation or operation block for which taring is to be provided, the conditioned, but untared, output of each sensor 12 which is to be tared is monitored for a predetermined period commencing at a predetermined time following a reference trigger signal to define the offsetting or compensating reference value necessary to tare the output of sensor 12. It will be appreciated that the monitor is advantageously programmable to allow taring with respect to either individual channels or all channels simultaneously. Further, the frequency with which the tar reference value is recalculated, e.g., each time an operation or block of operations is performed or once a day, is also advantageously programmable. Similarly, the monitor is advantageously programmable to allow the creation of tare values which are applicable to more than one operation or block of operations for a given channel.

The reference trigger signal advantageously is a selected machine or monitor generated control signal which is associated with start-up of the machine operation being sensed, and the time delay before sensor monitoring commences is selected to coincide with stabilization of the operating condition being sensed following start-up. For example, it may be desirable to institute a taring operation when a motor is running at a nominal speed. However, the tool controller only generates a control signal to first actuate the motor, but not when it reaches its nominal speed. The time delay provides a suitable interlude between generation of the control signal and the institution of taring that is sufficient to enable the motor to reach its nominal speed.

The monitoring period is selected to provide either an effectively "instantaneous" sample of the sensor output or a relatively prolonged sample from which an average sensor output can be derived. It will be appreciated that different control signals can be used as the reference signals for each sensor and each operation or block. Similarly, different time delays and monitoring periods can be used for different sensors and operations or blocks. Advantageously, to simplify installation, different time periods can be selected for different sensors but not for different operations or blocks.

Either the instantaneous value or the averaged value of the untared sensor output occurring at the selected tare time defines the offsetting or compensating reference value necessary to fully tare the output of a sensor 12. A low resolution approximation of the reference value is used to generate an analog biasing signal which causes the conditioned sensor output to be tared, i.e., reduced in magnitude, by a first taring factor, for example, to center the conditioned sensor output at 50% of the total response range of the monitor, as shown in Figure 3. A further, high resolution digital biasing signal, corresponding to the difference between the reference tare value and the low resolution approximation thereof used to generate the analog biasing signal, is also calculated. The low resolution, analog tared sensor output is sampled, each sample is converted to a high resolution digital signal, and a digital biasing signal is subtracted therefrom to obtain fully tared digital signals which are compared with digital signals corresponding to alarm limit levels to determine the existence of an alarm condition. In addition, the digital biasing signal can be used to change the zero reference point from the center of the sensor response range to one end thereof, to measure the signal against the other end of the range.

Once the analog biasing signal has been obtained for a given sensor, machine and operation or block, it is not necessary to repeat the process of generating the signal each time the operation block is subsequently performed. The digital equivalent of the biasing signal advantageously is stored and simply addressed prior to initiation of each block. Alternatively, a single analog taring signal which is not changed during the monitoring process is derived for each channel and is applied at power up to automatically compensate the unloaded sensor. However, the digital biasing signal for each block advantageously accounts for sporadic, short-term variations in the sensor output.

Preferred apparatus for implementation of the taring method of the present invention will now be described. As shown each monitor channel comprises a sensor 12 and signal conditioning circuitry, generally denoted 14, for conditioning the sensor output to interface sensor 12 with other monitoring components (not shown). As shown in the Figure, signal conditioning circuitry 14 advantageously comprises an amplifier stage, generally denoted 40, and a filter stage, generally denoted 50. Amplifier 40 advantageously comprises an input amplifier 42 and a buffer amplifier 44. The amplification of each amplifier 42, 44 is determined by the sensitivity of sensor 12 and the scaling thus required to obtain full range readings on the monitor display units (not shown). As will be discussed in more detail hereinbelow, amplifier 42 is further provided with a biasing input which reduces the magnitude of the amplifier output in relation to the biasing signal.

As shown, filter 50 advantageously comprises a low-pass filter 52 and a high-pass/digital low-pass filter 54. Low-pass filter 52 removes high-frequency noise from the sensor output signal. A switch 56 selectively connects the output signal from the filter 52 to either the high-pass or the low-pass portion of the filter 54. The high-pass portion of filter 54 can be used to remove the d.c. component of the output signal for RMS measurements. The digital low-pass portion of filter 54 can be used to provide further signal smoothing to reduce the influence of each sample, particularly in the case of sensor signals obtained in noisy environments.

As shown, the amplification factors of amplifier 40, and the cut-off frequencies of filter 50 and actuation of the switch 56 are controlled by a performance control circuit 80 which is responsive to control signals $S_{pc}$ generated by the associated channel processor 34 in dependence on operator-entered values received by central processor 32.

The output of filter 50 is fed to a sample-and-hold (S/H) circuit 60 which is connected to a full resolution (e.g., 12 bit) analog-to-digital (A/D) converter 70. S/H circuit 60 is triggered by a trigger signal generated by A/D converter 70 in response to a control signal $S_{sh}$ generated by the local channel processor 34. The timing of signal $S_{sh}$ is determined in dependence on an operator-selectable signal $S_{tdel}$. A tare delay instruction corresponding to signal $S_{tdel}$ is transmitted from central processor 32 to local channel processor 34, which determines the time at which signal $S_{sh}$ is generated by processor 34 following receipt of a timing signal from processor 32 which is generated in response to a predetermined machine-generated signal $S_{tt}$. Signal $S_{sh}$ activates A/D converter 70 until a reset signal (not shown) is generated by processor 34 at the end of a block cycle. Once signal $S_{sh}$ has been generated, S/H circuit 60 is triggered by A/D convertor 70 to sample the output of filter 50. The output of A/D converter 70 is fed to processor 34 for processing.

If the value of an operator-selectable signal $S_{tdur}$ corresponds to an "instantaneous" monitoring period, then channel processor 34 is instructed by central processor 32 to use the output of A/D converter 70 corresponding to the initial S/H circuit sample as the reference tare value. If the value of signal $S_{tdur}$ corresponds to a prolonged monitoring period, then channel processor 34 is instructed by central processor 32 to calculate the mean value of the A/D converter outputs corresponding to the S/H circuit samples obtained during the time period defined by signal $S_{tdur}$, and use the calculated mean value as the reference tare value.

The closest low resolution (e.g., 8-bit) approximation of the reference tare value is then generated by processor 34 and converted to an analog taring signal $S_{ta}$ by a digital-to-analog (D/A) converter 30. Signal $S_{ta}$ is fed to amplifier 42 as a bias signal which reduces the amplified sensor signal by the appropriate tare value, as illustrated in Figure 3. Processor 34 also calculates a full resolution (e.g., 12-bit) digital taring signal $S_{td}$ which corresponds to the difference between the low resolution approximation used to generate signal $S_{ta}$ and the reference tare value.

Once signal $S_{ta}$ has been generated, signal $S_{td}$ is subtracted from each output of A/D converter 70 to obtain sensor output samples which have been accurately tared with full resolution. The fully tared samples are compared with the alarm limit data transmitted to the corresponding local processor 34 for the machine operation or block being monitored to determine the existence of an alarm state.

The use of two different resolutions for the analog and digital tare values results in a cost savings while at the same time assuring high accuracy. More particularly, the hardware implementation of the taring function, through the D/A converter 20, utilizes a lower resolution convertor and is therefore less expensive. At the same time, the higher resolution taring is performed by the software, and is therefore not costly to implement, and enables a highly accurate data signal to be obtained for comparison with the alarm limits.

Advantageously, the analog tared sensor output level, without digital taring, is also compared with an alarm level corresponding to the maximum full-scale input for the channel to determine the existence of a "crash" alarm state which activates all alarm outputs.

It will be appreciated that the preferred embodiments described hereinabove are illustrative and that changes and modifications can be made within the scope of the present invention as claimed.

**Claims**

1. Apparatus for taring the output of a transducer producing an electrical output signal, wherein the null point of a measuring device is subject of drift compensation, characterized by the following in combination:

a) amplifier means (40) responsive to an analog biasing signal for producing an output signal which corresponds to said transducer output signal and which is tared by a factor corresponding to the magnitude of said biasing signal;

b) means (60, 70) for deriving from the untared output of said amplifier means a reference tare value;

c) means (34, 20) for producing said amplifier biasing signal from a low resolution approximation of said reference tare value;

d) means (34) for producing a high resolution digital tare signal corresponding to the difference between said reference tare value and said approximation thereof, and for subtracting said digital tare signal from a high resolution digital signal corresponding to the analog tared output of said amplifier means to obtain a fully tared transducer signal.

2. The apparatus of claim 1 wherein said deriving means (60, 70) comprises means (60) for sampling the magnitude of the untared output of said amplifier means for a predetermined duration commencing at a predetermined time to obtain a sample, the value of which constitutes said reference tare value.

3. The apparatus of claim 1 wherein said deriving means (60, 70) comprising means (60) for sampling the magnitude of the untared output of said amplifier means for a predetermined duration commencing at a predetermined time to obtain a plurality of samples, and means (34) for averaging the plurality of samples to obtain said reference tare value.

4. The apparatus of claim 3, wherein said deriving means (60, 70) comprises means (70) for converting the sampled output of said amplifier means to a high resolution digital signal, and said means (34, 20) for producing said biasing signal comprises means (34) for producing a low resolution digital signal from a high resolution digital signal corresponding to said reference tare value, and digital-to-analog converter means (20) for converting said low resolution digital signal to an analog signal constituting said biasing signal.

5. The apparatus of claim 3 wherein sampling means (60) is responsive to control signals for varying said predetermined time and said predetermined duration.

6. A method for taring the output of a transducer producing an electrical output signal characterized by the following steps in combination:

a) deriving a high resolution digital reference tare value from said output signal prior to taring;

b) taring in an analog fashion said output signal using an analog biasing signal derived from a low resolution digital approximation of said reference tare value;

c) sampling said tared signal, converting each sample to a high resolution equivalent digital signal, and subtracting from each equivalent digital signal a high resolution digital tare signal corresponding to the difference between said reference tare value and said low-resolution approximation thereof, thereby producing fully tared digital transducer output signals.

7. The method of claim 6 characterized in that said reference tare value corresponds to the magnitude at a predetermined time of said output signal after amplification by amplifier means (40), and said analog biasing signal controls the amplification of said amplifier means.

**Patentansprüche**

1. Vorrichtung für die Nulleinstellung des Ausganges eines Wandlers, welcher ein elektrisches Ausgangssignal erzeugt, wobei der Nullpunkt einer Meßeinrichtung eine Driftkompensation erfährt, gekennzeichnet durch die folgende Kombination:

a) eine Verstärkereinrichtung, welche auf ein analoges Vorspannsignal anspricht zum Erzeugen eines Ausgangssignals, welches dem Wandlerausgangssignal entspricht und welches um einen Faktor kalibriert wird, welcher der Größe des Vorspannsignals entspricht,

b) eine Einrichtung (60, 70) zum Ableiten eines Kalibrierungsbezugswertes aus dem nicht kalibrierten Ausgabewert der Verstärkereinrichtung,

c) eine Einrichtung (34, 20) zum Erzeugen des Verstärkervorspannsignals aus einer Näherung des Kalibrierungsbezugswertes mit geringer Auflösung,

d) eine Einrichtung (24) zum Erzeugen eines hochaufgelösten digitalen Kalibrierungssignals, welches dem Unterschied zwischen dem Kalibrierungsbezugswert und der Näherung desselben entspricht, und zum Abziehen des digitalen Kalibrierungssignals von einem digitalen Signal mit hoher Auflösung, welches dem analogen, kalibrierten Ausgangswert der Verstärkereinrichtung entspricht, um ein vollständig kalibriertes Wandlersignal zu erhalten.

2. Vorrichtung nach Anspruch 1, wobei die Ableitungseinrichtung (60, 70) eine Einrichtung (60) zum Abtasten der Größe des nicht kalibrierten Ausgangswertes der Verstärkereinrichtung für ein vorbestimmte Zeitdauer aufweist, welche zu einem bestimmten Zeitpunkt beginnt, um eine Probeabtastung zu erhalten, deren Wert den Kalibrierungsbezugswert bildet.

3. Vorrichtung nach Anspruch 1, wobei die Ableitungseinrichtung (60, 70) eine Einrichtung (60) zum Abtasten der Größe des nicht kalibrierten Ausgangswertes der Verstärkereinrichtung für eine bestimmte Zeitdauer aufweist, welche zu einem vorbestimmten Zeitpunkt beginnt, um eine Mehrzahl von Probeabtastungen zu erhalten, und eine Einrichtung (34) aufweist, zum Mitteln der Mehrzahl von Abtastungen, um den Kalibrierungsbezugswert zu erhalten.

4. Vorrichtung nach Anspruch 3, wobei die Ableitungseinrichtung (60, 70) eine Einrichtung (70) zum Umsetzen des probeweise abgetasteten Ausgangswertes der Verstärkereinrichtung in ein digitales Signal mit hoher Auflösung aufweist, und wobei die Einrichtung (34, 20) zum Erzeugen des Vorspannsignales eine Einrichtung (34) zum Erzeugen eines digitalen Signals mit niedriger Auflösung aus einem digitalen Signal mit hoher Auflösung aufweist, welches dem Kalibrierungsbezugswert entspricht, und eine Digital-Analog-Wandlereinrichtung (20) aufweist, zum Umsetzen des digitalen Signals mit niedriger Auflösung in ein analoges Signal, welches das Vorspannsignal bildet.

5. Vorrichtung nach Anspruch 3, wobei die Abtasteinrichtung (60) auf Steuersignale zum Verändern des vorbestimmten Zeitpunktes und der vorbestimmten Zeitdauer anspricht.

6. Verfahren zum Kalibrieren des Ausgangswertes eines Wandlers, welcher ein elektrisches Ausgangssignal erzeugt, gekennzeichnet durch die Kombination der folgenden Schritte:

a) Ableiten eines digitalen Kalibrierungsbezugswertes mit hoher Auflösung aus dem Ausgangssignal vor der Kalibrierung,

b) analoges Abgleichen (Kalibrieren) des Ausgangssignales unter Verwendung eines analogen Vorspannsignals, welches aus einer digitalen Näherung mit niedriger Auflösung aus dem Kalibrierungsbezugswert abgeleitet wurde,

c) Abtasten des kalibrierten Signals, Umsetzen jeder Probeabtastung in ein äquivalentes digitales Signal mit hoher Auflösung und Abziehen eines digitalen Kalibrierungssignals, welches der Differenz zwischen dem Kalibrierungsbezugswert und dessen Näherung mit niedriger Auflösung entspricht, von jedem äquivalenten digitalen Signal und dadurch Erzeugen von vollständig kalibrierten digitalen Wandlerausgangssignalen.

7. Verfahren nach Anspruch 6, dadurch gekennzeichnet, daß der Kalibrierungsbezugswert dem Wert des Ausgangssignals zu einem vorbestimmten Zeitpunkt nach einer Verstärkung durch eine Verstärkereinrichtung (40) entspricht, und daß das analoge Vorspannsignal die Verstärkung der Verstärkereinrichtung steuert.

**Revendications**

1. Dispositif pour tarer la sortie d'un transducteur produisant un signal de sortie électrique, dans lequel le point zéro d'un dispositif de mesure est soumis à une compensation de la dérive, caractérisé par les caractéristiques suivantes, en combinaison:

a) des moyens amplificateurs (40) qui répondent à un signal de polarisation analogique en produisant un signal de sortie qui correspond audit signal de sortie du transducteur et qui est taré par un facteur correspondant à l'amplitude dudit signal de polarisation;

b) des moyens (60, 70) destinés à dériver une valeur de tare de référence à partir de la sortie non tarée desdits moyens amplificateurs;

c) des moyens (34, 20) destinés à produire ledit signal de polarisation de l'amplificateur à partir d'une approximation à basse résolution de ladite valeur de tare de référence;

d) des moyens (34) destinés à produire un signal de tare numérique à haute résolution qui correspond à la différence entre ladite valeur de tare de référence et ladite approximation de cette valeur, et à soustraire ledit signal de tare numérique d'un signal numérique à haute résolution qui correspond à la sortie tarée analogique desdits moyens amplificateurs pour obtenir un signal de transducteur entièrement taré.

2. Dispositif selon la revendication 1, dans lequel lesdits moyens (60, 70) destinés à dériver une valeur de tare de référence de la sortie non tarée desdits moyens amplificateurs comprennent des moyens (60) servant à échantillonner l'amplitude de la sortie non tarée desdits moyens amplificateurs pendant une durée prédéterminée qui commence à un instant prédéterminé pour obtenir un échantillon dont la valeur constitue ladite valeur de tare de référence.

3. Dispositif selon la revendication 1, dans lequel lesdits moyens (60, 70) destinés à dériver une valeur de tare de référence de la sortie non tarée desdits moyens amplificateurs comprennent des moyens (60) qui échantillonnent l'amplitude de la sortie non tarée desdits moyens amplificateurs pendant une durée prédéterminée qui commence à un instant déterminé pour obtenir une pluralité d'échantillons, et des moyens (34) servant à faire la moyenne de la pluralité d'échantillons pour obtenir ladite valeur de tare de référence.

4. Dispositif selon la revendication 3, dans lequel lesdits moyens (60, 70) destinés à dériver une valeur de tare de référence à partir de la sortie non tarée desdits moyens amplificateurs comprennent des moyens (70) servant à convertir la sortie échantillonnée desdits moyens amplificateurs en un signal numérique à haute résolution et lesdits moyens (34, 20) servant à produire ledit signal de polarisation comprennent des moyens (34) servant à produire un signal numérique à basse résolution à partir d'un signal numérique à haute résolution correspondante à ladite valeur de tare de référence et des moyens convertisseurs numérique-analogique (20) servant à convertir ledit signal numérique à basse résolution en un signal analogique constituant ledit signal de polarisation.

5. Dispositif selon la revendication 3, dans lequel les moyens échantillonneurs (60) répondent à des signaux de commande en modifiant ledit instant prédéterminé et ladite durée prédéterminée.

6. Procédé pour tarer la sortie d'un transducteur produisant un signal de sortie électrique, caractérisé par les phases suivantes, en combinaison:

a) dériver une valeur de tare de référence numérique à haute résolution à partir dudit signal de sortie avant le tarage;

b) tarer dans le mode analogique ledit signal de sortie en utilisant un signal de polarisation analogique dérivé d'une approximation numérique à basse résolution de ladite valeur de tare de référence;

c) échantillonner ledit signal taré, convertir chaque échantillon en un signal numérique équivalent à haute résolution, et soustraire de chaque signal numérique équivalent un signal de tare numérique à haute résolution qui correspond à la différence entre ladite valeur de tare de référence et ladite approximation à basse résolution de cette valeur, en produisant ainsi des signaux de sortie de transducteur qui sont numériques et entièrement tarés.

7. Procédé selon la revendication 6, caractérisé en ce que ladite valeur de tare de référence correspond à l'amplitude à un instant prédéterminé dudit signal de sortie après amplification par les moyens amplificateurs (40) et ledit signal de polarisation analogique commande l'amplification desdits moyens amplificateurs.

# EP 0 157 997 B1

## Fig.1

## Fig.2

MAX

L II

L I

peak

L III

t

L III

L I

disable

## Fig.3

100%

p

50%

Tare

Tare

0

50%